# EUROPEAN PATENT APPLICATION

(11) **EP 3 309 694 A1**
(43) Date of publication of application: **18.04.2018**
(21) Application number: 16807369.0
(22) Date of filing: 02.06.2016
(51) Int. Cl.: G06F 17/30, G06T 1/00

(54) **IMAGE INFORMATION PROCESSING SYSTEM**

(30) Priority: 10.06.2015 JP 2015117539
(71) Applicant: We'll Corporation, Hakusan-shi, Ishikawa 924-0051 (JP)
(72) Inventor: WAKABAYASHI, Kazuyoshi, Hakusan-shi Ishikawa 924-0051 (JP)
(74) Representative: Betten & Resch
(86) International application number: PCT/JP2016/066355
(87) International publication number: WO 2016/199662

(57) **Abstract**

Provided is an image information processing system capable of searching for a name of an captured object and the like with high precision, using the captured image, even if a user does not know the name of the captured object and the like.

Includes are an image database 11 that stores image data for matching of a captured object for matching in association with identification information including a name of the captured object for matching, an image acquiring unit 12 that acquires image data, a search target input receiving unit 13 that receives selection of a search object from the image data, an image search processing unit 14 that calculates the degree of similarity between the search object and the captured object for matching, and searches for image data for matching having the degree of similarity that exceeds a reference value, a display processing unit 15 that displays the search result, and a search result processing unit 16 that receives a selection input from a user to the search result, and stores the image data acquired by the image acquiring unit 11 as image data for matching to the image database 11 in association with the identification information of the search result of which the selection input from the user has been received.

## Description

### Technical Field

The present invention relates to an image information processing system that searches for names and descriptions of captured objects on image data and provides the names and descriptions to users.

### Background Art

With the spread of smartphones and the like equipped with a camera function, there are increasing cases where users capture natural scenery such as flowers, birds, buildings, and mountains that the users are curious about in daily life, while traveling, and the like.

As often happens when checking detailed information of the captured object captured by the user, the user doesn't know even the name of the captured object, has difficulty in entering an appropriate keyword when performing keyword search, and cannot obtain a satisfactory search result.

Therefore, an image search method and an apparatus as disclosed in Patent Literature 1 enable obtainment of information regarding an unknown target from a captured image of the captured unknown target. The image search method compares a binarized image of a captured image of an object and a binarized image of each item stored in an image database to search for candidates of the name of the object from the image database.

### Citation List

### Patent Literature

Patent Literature 1: JP 10-254901 A

### Summary of the Invention

### Technical Problem

However, the number of the images for comparison with the captured image stored in the image database is limited. Therefore, when the captured image and the image stored in the image database are compared, there is a substantial difference in search results, even for the same object, due to a difference in capturing conditions such as a season and a time zone of when the image is captured. To take account of the difference, ambiguity is increased for the degree of similarity calculated from the comparison result to facilitate obtainment of the search result, which results in reduction in search precision.

In view of the above problems, the present invention provides an image information processing system.

### Solution to Problem

An image information processing system of the present invention made to solve the above problem including: an image database configured to store image data for matching of a captured object for matching in association with identification information including a name of the captured object for matching; an image acquiring unit configured to acquire image data; a search target input receiving unit configured to receive selection of a search object from the image data acquired by the image acquiring unit; an image search processing unit configured to calculate the degree of similarity between the search object received by the search target input receiving unit and the captured object for matching stored in the image database, and search for image data for matching of a captured object for matching having the degree of similarity that exceeds a reference value; a display processing unit configured to display a search result including the searched image data for matching and the identification information, on a display unit of an information communication terminal used by a user; and a search result processing unit configured to receive a selection input from the user to the search result displayed on the display unit of the information communication terminal, and stores the image data acquired by the image acquiring unit, as image data for matching, in association with the identification information of the search result of which the selection input from the user has been received.

This configuration enables search for the name of the captured object and the like with high precision, using a captured image captured by the user, even if the user doesn't know the name of the captured object and the like from the captured image, for example.

Further, in the image information processing system of the present invention, the search result processing unit stores image data of a captured search object having the degree of similarity that exceeds a predetermined value set to be higher than the reference value, as image data for matching, in association with the identification information of the search result of which the selection input from the user has been received.

With this configuration, the image data stored in the image database as the image data for matching is limited to image data with a high degree of similarity. Therefore, precision of the image search can be further improved.

Further, in the image information processing system of the present invention, the image database stores attribute information including type information, capturing position information, and capturing time information corresponding to the image data for matching of a captured object for matching, in association with the identification information, the search target input receiving unit receives an input of the attribute information corresponding to the search object, and the image search processing unit calculates the degree of coincidence between the attribute information corresponding to the search object of which the input has been received by the search target input receiving unit and the attribute information corresponding to the image data for matching, extracts image data for matching of a captured object for matching having the degree of coincidence that exceeds an attribute reference value, calculates the degree of similarity between the search object received by the search target input receiving unit and the captured object for matching of the extracted image data for matching, and searches for the image data for matching of a captured object for matching having the degree of similarity that exceeds a reference value.

With this configuration, the image data for matching with matched attribute information is extracted and the degree of similarity is calculated. Therefore, a search processing speed can be improved.

### Advantageous Effects of Invention

The image information processing system of the present invention can search for the name and the like of the captured object with high precision by using the captured image, even if the user does not know the name and the like of the captured object from the image captured by the user.

### Brief Description of Drawings

Fig. 1 is a conceptual diagram schematically illustrating an example of a system configuration of an image information processing system according to the present embodiment.
Fig. 2 is a conceptual diagram schematically illustrating an example of a hardware configuration of the image information processing system according to the present embodiment.
Fig. 3 is a diagram illustrating an example of items of a record of image information for matching of the present embodiment.
Fig. 4 is a diagram illustrating an example of items of a record of image data for matching of the present embodiment.
Fig. 5 is a diagram illustrating an example of a state in which a search object of the present embodiment is selected.
Fig. 6 is a diagram illustrating an example of a state in which a search result of the present embodiment is displayed.
Fig. 7 is a diagram illustrating another example of a state in which a search result of the present embodiment is displayed.
Fig. 8 is a diagram illustrating an example of a screen prompting registration of image data of the present embodiment as image data for matching.
Fig. 9 is an explanatory diagram of processing of registering image data of the present embodiment as image data for matching.
Fig. 10 is a flowchart illustrating a processing process of the image information processing system of a first example.
Fig. 11 is a flowchart illustrating a processing process of the image information processing system of a second example.
Fig. 12 is a flowchart illustrating a processing process of the image information processing system of a third example.
Fig. 13 is a diagram illustrating another example of a state in which a search result of the present embodiment is displayed.

### Best Mode for Carrying Out the Invention

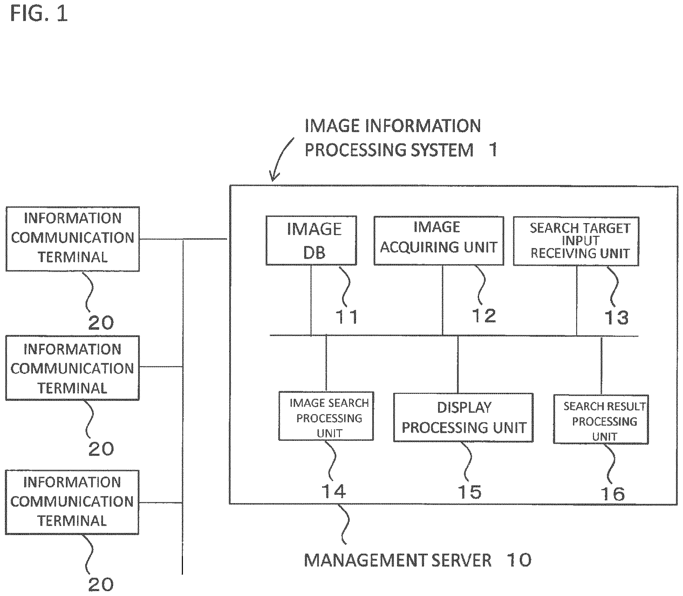

Hereinafter, a system configuration of an image information processing system of the present embodiment will be described with reference to Fig. 1.

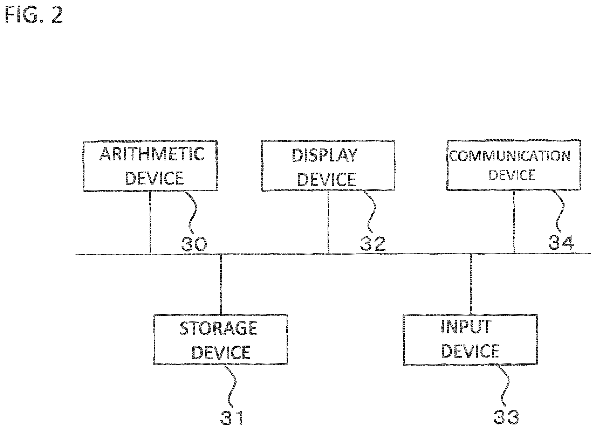

An image information processing system 1 of the present embodiment is realized using a computer including a server and the like. As illustrated in Fig. 2, in the image information processing system 1 of the present embodiment, the computer includes an arithmetic device 30 such as a CPU that executes arithmetic processing of a program, a storage device 31 such as a RAM or a hard disk that stores information, a display device 32 such as a display that performs display, an input device 33 such as a mouse, a keyboard, and a touch panel used to perform an input, and a communication device 34 that transmits/receives the processing result of the arithmetic device 30 and the information stored in the storage device 31 to/from the computer.

Functions of means of the present invention are merely logically distinguished, and may physically or virtually have the same area. Further, in the image information processing system 1 of the present invention, these functions may be realized by one server, or each function may be distributed to two or more servers. In addition, a part or all of the functions of the present invention may be performed by an information communication terminal 20 such as a smartphone equipped with a camera function used by the user. In particular, the information communication terminal 20 may perform processing of an image acquiring unit 12, a search target input receiving unit 13, a display processing unit 15, and the like, which will be described below. With the configuration, a processing load of a management server 10 can be reduced.

The management server 10 having the functions of the image information processing system 1 can transmit/receive information to/from the information communication terminal 20 used by an administrator or a user through a network such as the Internet. Examples of the information communication terminal 20 include a smartphone equipped with a camera function, a personal computer, and portable communication terminals such as a mobile phone, a PHS, and a tablet computer.

The image information processing system 1 includes an image database 11, the image acquiring unit 12, the search target input receiving unit 13, an image search processing unit 14, the display processing unit 15, and a search result processing unit 16.

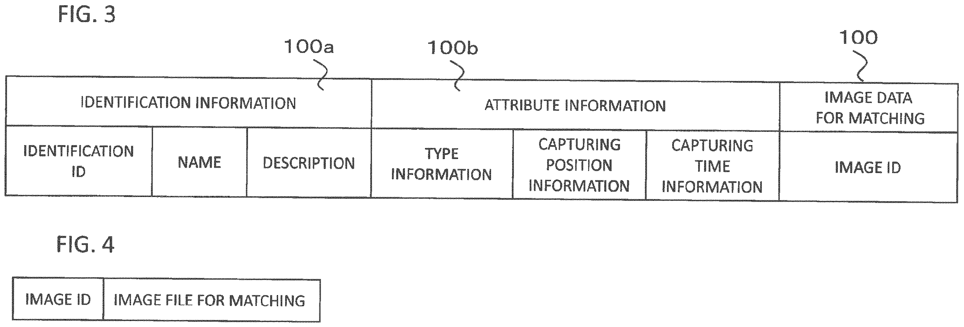

As illustrated in Fig. 3, the image database 11 stores image data for matching 100 of the captured object for matching in association with identification information 100a including a name of the captured object for matching. The image data for matching 100 includes, as illustrated in Fig. 4, image files of natural scenery such as flowers, birds, animals and plants such as bugs, buildings such as towers, and mountains, and image IDs attached to the image files. Further, the image database 11 may store attribute information 100b including type information, capturing position information, and capturing time information corresponding to the image data for matching 100 of the captured object for matching in association with the identification information 100a.

The image acquiring unit 12 acquires image data 2 from the information communication terminal 20 used by the user. The file format of the image data 2 is not particularly limited. For example, in a case where the information communication terminal 20 is a smartphone equipped with a camera function, the image data 2 may be image data 2 captured by the user with the camera.

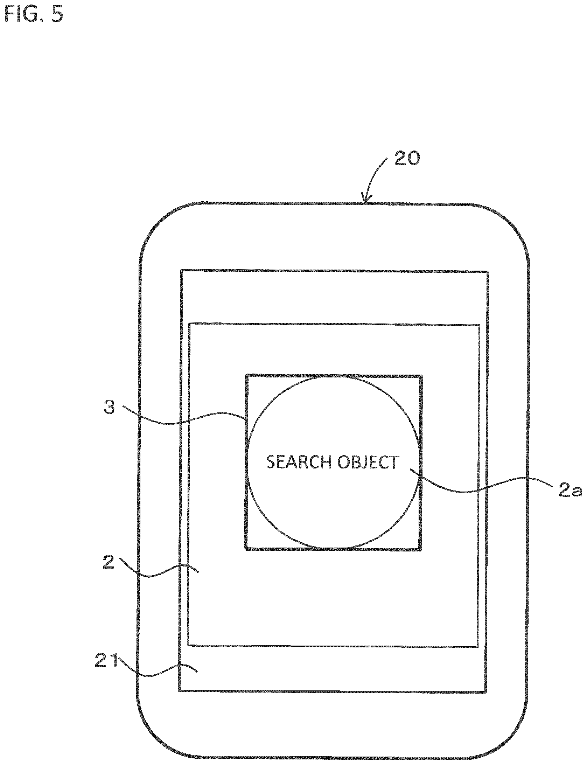

The search target input receiving unit 13 receives selection of a search object 2a from the image data 2 acquired by the image acquiring unit 12. Examples of means for receiving the selection of the search object 2a include means for displaying the image data 2 on a display unit 21 made of a liquid crystal display and the like of the information communication terminal 20, and prompting the user to tap the search object 2a from among the captured objects of the image data 2, means for moving a selection window 3 as illustrated in Fig. 5 to surround the search object 2a, and means for reading gaze information given by the user on the search object 2a with so-called an in-camera provided on the display unit 21 side of the information communication terminal 20.

Then, the search target input receiving unit 13 cuts out, enlarges, rotates, and moves a portion of the received search object 2a to convert the image data 2 into a composition with which the degree of similarity with the image data for matching 100 stored in the image database 11 can be easily calculated.

Further, the search target input receiving unit 13 may receive an input of attribute information corresponding to the search object 2a. Examples of the attribute information corresponding to the search object 2a include type information, capturing position information, and capturing time information. Examples of the type information include "flower", "bird", "insect", "building", and "natural scenery". The capturing position information is information of a captured place, and may be acquired from a GPS device provided in the information communication terminal 20. The capturing time information includes not only time information but also date information.

The image search processing unit 14 calculates the degree of similarity between the search object 2a received by the search target input receiving unit 13 and the captured object for matching of the image data for matching 100 stored in the image database 11, and searches for the image data for matching 100 of a captured object for matching having the degree of similarity that exceeds a reference value. Here, as a method of calculating the degree of similarity, the degree of similarity is calculated using a contour shape, a binarized image, color distribution, or the like, which is extracted by a known image processing technology. The degree of similarity is calculated to be 100% when the search object 2a and the captured object for matching are perfectly matched.

Further, the image search processing unit 14 calculates the degree of coincidence between the attribute information corresponding to the search object 2 of which the input has been received by the search target input receiving unit 13 and the attribute information 100b corresponding to the image data for matching 100, extracts the image data for matching 100 of a captured object for matching having the degree of coincidence that exceeds an attribute reference value, calculates the degree of similarity between the search object 2a received by the search target input receiving unit 13 and the captured object for matching of the extracted image data for matching 100, and searches for the image data for matching 100 of a captured object for matching having the degree of similarity that exceeds a reference value. For the degree of coincidence, it is favorable to set an attribute reference value for each attribute information, and for example, the attribute reference value of the type information is favorably perfect match.

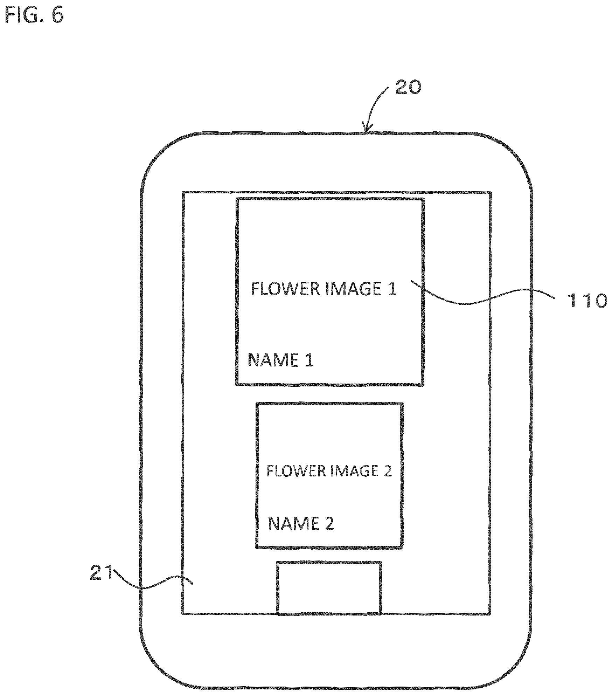

The display processing unit 15 displays a search result 110 including the searched image data for matching 100 and the identification information 100a on the display unit 21 of the information communication terminal 20. The display processing unit 15 can arrange and display the search result 110 in descending order according to the degree of similarity. Further, the display processing unit 15 changes the display size of the search result 110 according to the degree of similarity as illustrated in Fig. 6, so that the user can easily visually recognize the search result 110 with a high degree of similarity.

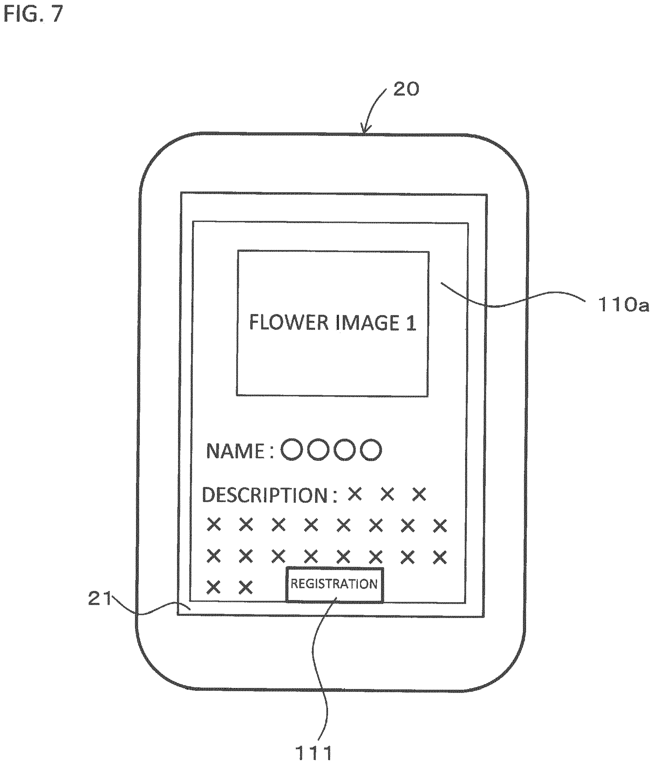

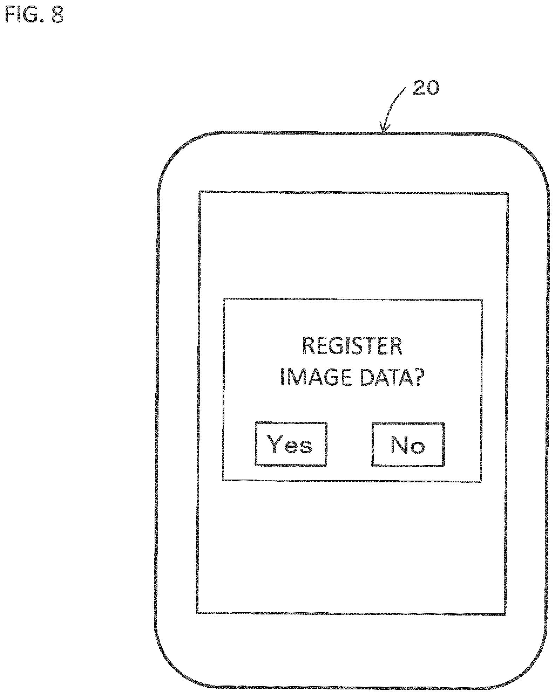

Further, when receiving a selection input to the a search result 200 displayed on the display unit 21 of the information communication terminal 20 from the user, the display processing unit 15 displays, as illustrated in Fig. 7, a screen 110a configured from the captured object for matching and the identification information 100a corresponding to the captured object for matching on the display unit 21 of the information communication terminal 20. Further, when receiving an input to a registration button 111 displayed on the screen 110a from the user, the display processing unit 15 displays a screen that prompts a selection input as to whether registering the image data 2, which is displayed on the display unit 21 of the information communication terminal 20 illustrated in Fig. 8.

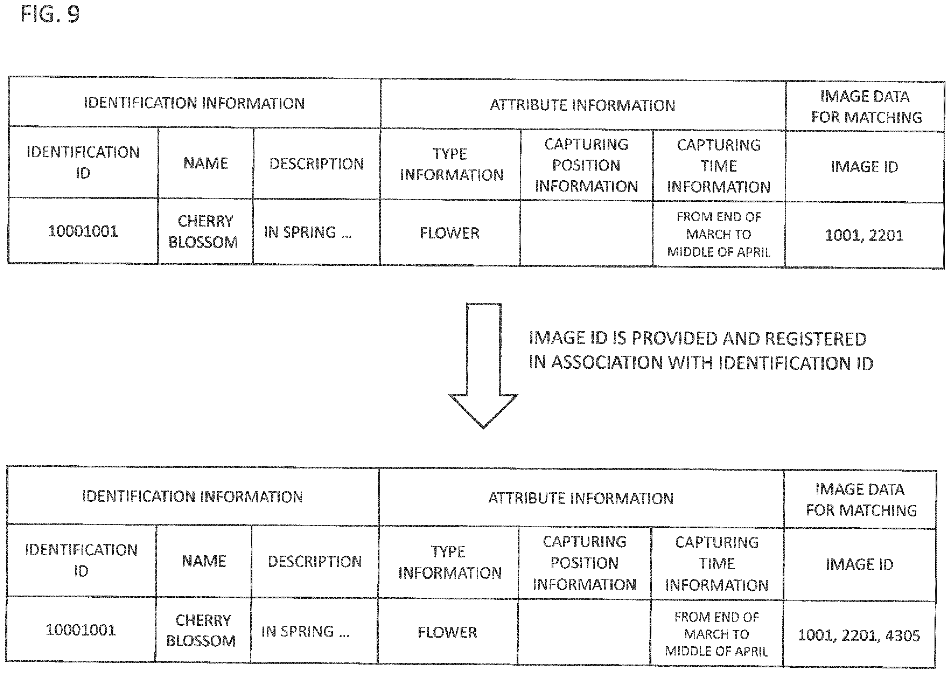

The search result processing unit 16 receives a selection input from the user on the screen that prompts a selection input as to whether registering the image data 2, which is displayed on the display unit 21 of the information communication terminal 20, and stores the image data 2 acquired by the image acquiring unit 12 as the image data for matching 100 to the image database 11 in association with the identification information 100a of the search result 110 of which the selection input from the user has been received. To be specific, as illustrated in Fig. 9, the search result processing unit 16 provides an image ID for distinguishing the image data for matching 100 to the image data 2 and stores the image ID to the image database 11 in association with an identification ID of the identification information 100a.

Further, the search result processing unit 16 stores the image data 2 as the image data for matching 100 to the image database 11 in association with the identification information 100a of the search result 110 of which the selection input from the user has been received, limiting the image data 2 to the image data 2 of the captured search object 2a having the degree of similarity that exceeds a predetermined value set to be higher than a reference value.

### First Example

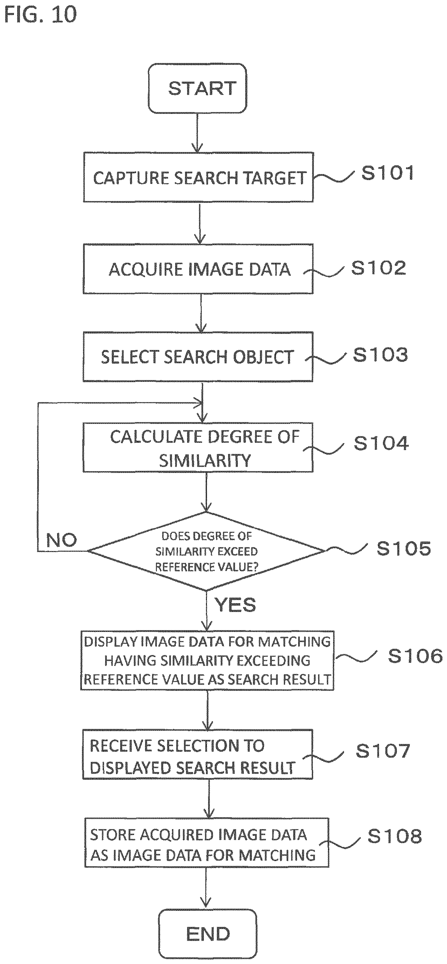

Next, an example of a processing process of the image information processing system 1 will be described below with reference to the flowchart of Fig. 10.

In the first example, processing of capturing an unknown flower planted in a park or the like using a camera of a smartphone having a camera function as the information communication terminal 20 (S101), and displaying identification information including the name of the flower from the image data 2 of captured "flower" will be described.

The image acquiring unit 12 acquires the image data 2 of "flower" captured by the information communication terminal 20 used by the user (S102). Note that the image data 2 may not be image data captured by the information communication terminal 20 used by the user and may be the image data 2 acquired through the Internet or the like.

The search target input receiving unit 13 receives selection of the search object 2a from the image data 2 displayed on the display unit 21 of the information communication terminal 20 (S103). Then, the search target input receiving unit 13 cuts out, enlarges, rotates, and moves a portion of the received search object 2a to convert the image data 2 into a composition with which the degree of similarity with the image data for matching 100 stored in the image database 11 can be easily calculated. A method of receiving the selection of the search object 2a is not particularly limited. For example, the selection of the search object 2a is received by tapping the search object 2a or by moving the selection window 3 to surround the search object 2a as illustrated in Fig. 5.

The image search processing unit 14 calculates the degree of similarity between the search object 2a received by the search target input receiving unit 13 and the captured object for matching stored in the image database 11 (S104) . As a method of calculating the degree of similarity, the degree of similarity is calculated using a contour shape, a binarized image, color distribution, or the like, which is extracted by a known image processing technology. The degree of similarity calculated in this way can be displayed as a numerical value, and is calculated to be 100% when the search object 2a and the captured object for matching are perfectly matched.

The image search processing unit 14 then searches for the image data for matching 100 of a captured object for matching having the degree of similarity that exceeds a reference value (S105). Here, the reference value can be appropriately changed. For example, 80% may be set as the reference value.

The display processing unit 15 displays the search result 110 including the image data for matching 100 and the identification information 100a on the display unit 21 of the information communication terminal 20 (S106). The search result 110 is displayed in descending order according from search result 110 having a high degree of similarity to the search result 110 having a low degree of similarity calculated by the image search processing unit 14. Further, the display processing unit 15 may display the search result 110 having a high degree of similarity in a largest display size as illustrated Fig. 6.

Further, the display processing unit 15 can receive a selection input to the search result 110 from the user, and display the screen 110a configured from the captured object for matching and the identification information 100a for the captured object for matching illustrated in Fig. 7 on the display unit 21 of the information communication terminal 20.

When receiving an input to the registration button 111 illustrated in Fig. 7, the display processing unit 15 receives a selection input by the user to the search result 110 displayed on the display unit 21 of the information communication terminal 20, and displays a screen that prompts a selection input as to whether registering the image data 2 illustrated in Fig. 8.

Then, when a Yes button is input on the screen that prompts a selection input as to whether registering the image data 2 illustrated in Fig. 8 (S107), the search result processing unit 16 displays the image data 2 acquired by the image acquiring unit 12 to the image database 11 as the image data for matching 100 in association with the identification information 100a of the search result 110 of which the selection input from the user has been received (S108). To be specific, as illustrated in Fig. 9, the search result processing unit 16 provides an image ID for distinguishing the image data for matching 100 to the image data 2 and stores the image ID to the image database 11 in association with an identification ID of the identification information 100a.

In this manner, the image data 2 is sequentially accumulated as the image data for matching 100, and the accuracy of the calculated degree of similarity is improved. Therefore, the search precision can be improved and a more accurate search result 110 can be provided.

### Second Example

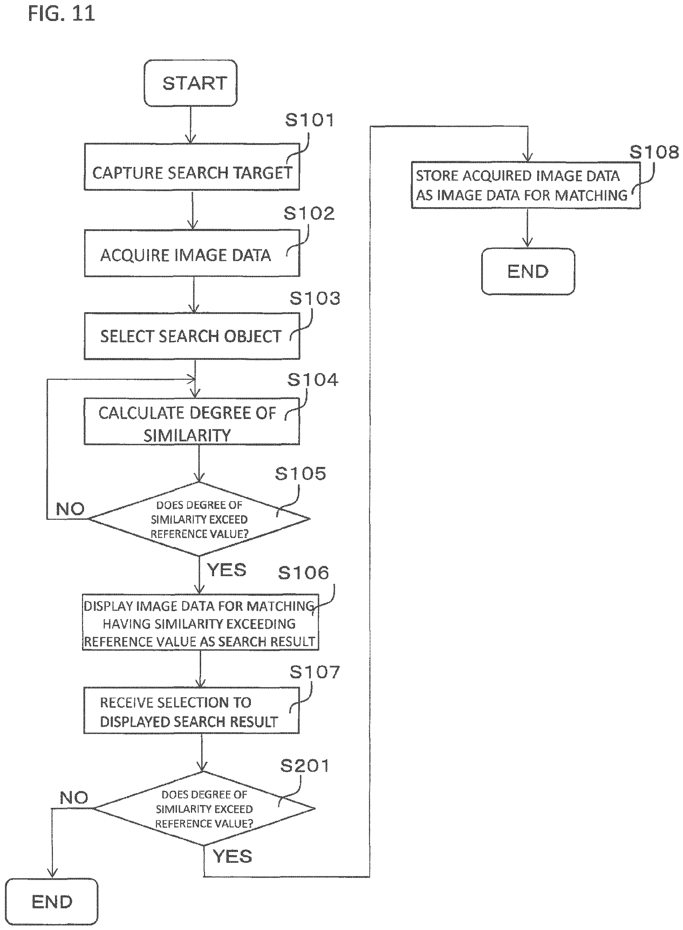

In the first example, whether storing the image data 2 captured by the user to the image database 11 as the image data for matching 100 is left to the user's own decision. Therefore, the image data 2 may not be appropriate to be stored as the image data for matching 100. Therefore, in the second example, a case in which only image data 2 that satisfies a predetermined condition can be stored in an image database 11 as image data for matching 100 will be described. An example of a processing process of the second example will be described with reference to the flowchart shown in Fig. 11. The same reference numeral is given to a process similar to that in the first example, and a detailed description thereof is omitted.

When the Yes button is input on the screen that prompt a selection input as to whether registering the image data 2 illustrated in Fig. 8, the search result processing unit 16 determines whether the degree of similarity exceeds a predetermined value set to be higher than a reference value (S201). When the search result processing unit 16 determines that the degree of similarity exceeds the predetermined value set to be higher than the reference value, the search result processing unit 16 stores the image data 2 of the search object 2a to the image database 11 as the image data for matching 100 in association with the identification information 100a of the received search result 110 (S108).

What is associated with the identification information 100a as the image data for matching 100 is limited to only the image data 2 having a high degree of similarity. Therefore, the search precision can be further improved.

### Third Example

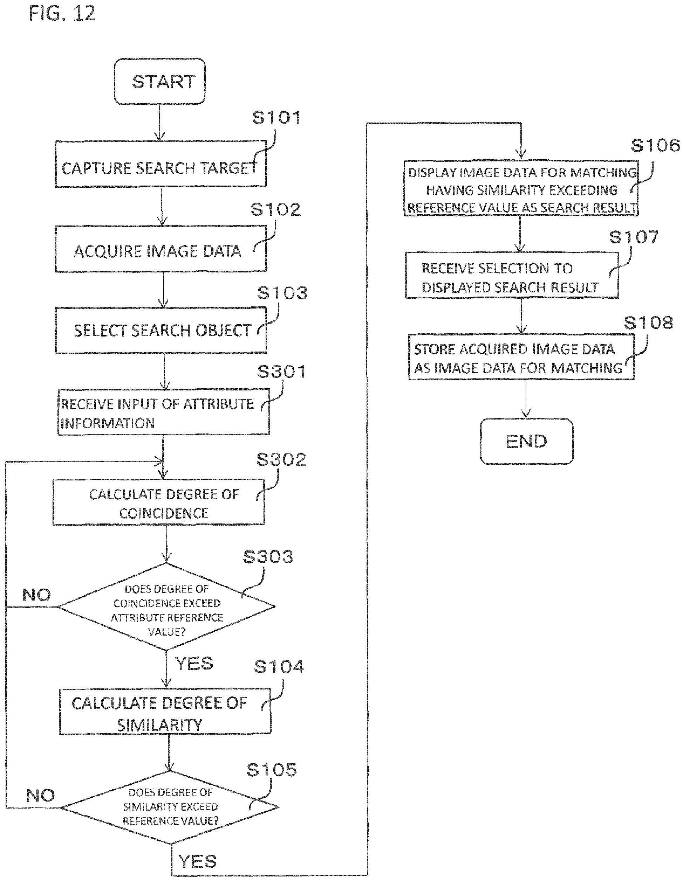

In the first and second examples, the degrees of similarity between the search object 2a and all the captured object for matching stored in the image database 11 are calculated, and when the calculated degrees of similarity exceed the reference value, the search result 110 is displayed as results having high degrees of similarity on the display unit 21 of the information communication terminal 20 used by the user. As described above, with an increase in the number of image data for matching 100, a delay of the processing speed of the calculation processing of the degree of similarity by the image search processing unit 14 and a load to the management server 10 that performs the calculation processing of the degree of similarity are increased. Therefore, in the present third example, a case of limiting the number of image data for matching 100 for which the degree of similarity is to be calculated will be described with reference to the flowchart shown in Fig. 12. The same reference numeral is given to a process similar to that in the first and second examples, and a detailed description thereof is omitted.

The search target input receiving unit 13 receives not only an input of the search object 2a but also an input of the attribute information corresponding to the search object 2a (S301). The search object 2a of the present example is "flower", and thus the search target input receiving unit 13 receives selection of the type information of "flower". Furthermore, the search target input receiving unit 13 may receive inputs of the capturing position information and the capturing time information of the search object 2a. The capturing position information and the capturing time information are respectively acquired from a GPS device and a date device provided in the information communication terminal 20.

The image search processing unit 14 calculates the degree of coincidence between the attribute information corresponding to the search object 2a received by the search target input receiving unit 13 and the attribute information 100b corresponding to the captured object for matching stored in the image database 11 (S302), and extracts the captured object for matching having the degree of coincidence that exceeds the attribute reference value (S303) . For example, the degree of coincidence is calculated to be 100% when the attribute information of the search object 2a and the attribute information 100b of the captured object for matching are perfectly matched.

The image search processing unit 14 then calculates the degree of similarity between the search object 2a and the extracted captured object for matching (S104), and searches for the image data for matching 100 of the captured object for matching having the degree of similarity that exceeds the reference value (S105) . In the third example, in a case where the type information of the attribute information corresponding to the search object 2a is "flower", the degree of similarity is calculated limiting the search range to the captured object for matching in which the type information in the attribute information 100b is set to "flower". Therefore, the search range is limited, and the processing speed is improved.

Further, in a case where the capturing time information of the attribute information corresponding to the search object 2a corresponds to "daytime", the search range is limited to the captured object for matching in which the capturing time information of the attribute information 100b is set to "day time", so that the degree of similarity can be calculated between the objects in similar conditions. Therefore, the search precision can be improved.

### [Modifications of Embodiments]

The invention disclosed in the present specification is not limited to the configurations of the inventions and embodiments, and also includes a specified configuration in which a partial configuration of the aforementioned configuration is changed to another configuration disclosed in the present specification, a specified configuration in which another configuration disclosed in the present specification is added to the aforementioned configuration, a specified configuration having a more generic concept in which the partial configuration is deleted to the extent of obtaining the function and effect, within an applicable scope and also includes modifications described below.

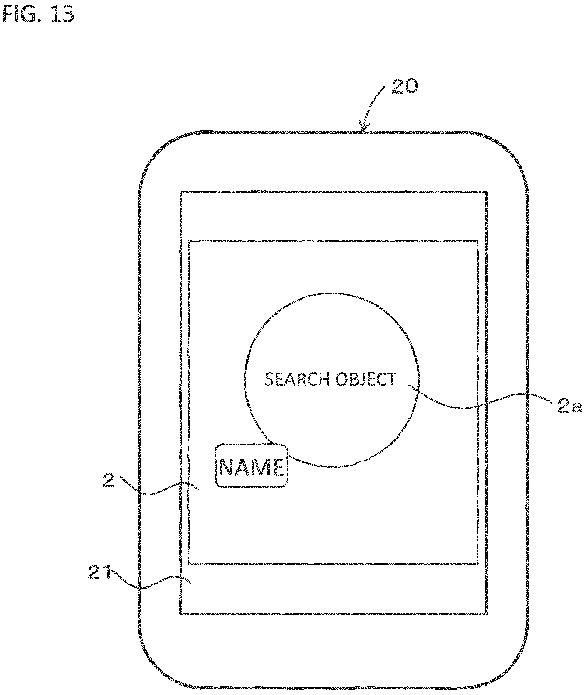

As illustrated in Fig. 13, the display processing unit 15 may display the identification information 100a associated with the image data 2 of the search target 2a by the search result processing unit 16, near the search object 2a of the image data 2. To be specific, when the search target input receiving unit 13 cuts out a portion of the search object 2a, the search target input receiving unit 13 acquires coordinate position information of the image data 2 of the search object 2a. The display processing unit 15 then shifts and displays the identification information 100a associated with the image data 2 of the search object 2a by the search result processing unit 16 to a position not overlapping with the coordinate position information.

### Reference Signs List

- 1: Image information processing system
- 2: Image data
- 3: Selection window
- 10: Management server
- 11: Image DB
- 12: Image acquiring unit
- 13: Search target input receiving unit
- 14: Image search processing unit
- 15: Display processing unit
- 16: Search result processing unit
- 20: Information communication terminal
- 21: Display unit
- 30: Arithmetic device
- 31: Storage device
- 32: Display device communication device
- 33: Input device
- 34: Communication device
- 100: Image data for matching
- 110: Search result

## Claims

1. An image information processing system comprising:
an image database configured to store image data for matching of a captured object for matching in association with identification information including a name of the captured object for matching;
an image acquiring unit configured to acquire image data;
a search target input receiving unit configured to receive selection of a search object from the image data acquired by the image acquiring unit;
an image search processing unit configured to calculate the degree of similarity between the search object received by the search target input receiving unit and the captured object for matching stored in the image database, and search for image data for matching of a captured object for matching having the degree of similarity that exceeds a reference value;
a display processing unit configured to display a search result including the searched image data for matching and the identification information, on a display unit of an information communication terminal used by a user; and
a search result processing unit configured to receive a selection input from the user to the search result displayed on the display unit of the information communication terminal, and stores the image data acquired by the image acquiring unit, as image data for matching, in association with the identification information of the search result of which the selection input from the user has been received.

2. The image information processing system according to claim 1, wherein
the search result processing unit stores image data of a captured search object having the degree of similarity that exceeds a predetermined value set to be higher than the reference value, as image data for matching, in association with the identification information of the search result of which the selection input from the user has been received.

3. The image information processing system according to claim 1 or 2, wherein
the image database stores attribute information including type information, capturing position information, and capturing time information corresponding to the image data for matching of a captured object for matching, in association with the identification information,
the search target input receiving unit receives an input of the attribute information corresponding to the search object, and
the image search processing unit calculates the degree of coincidence between the attribute information corresponding to the search object of which the input has been received by the search target input receiving unit and the attribute information corresponding to the image data for matching, extracts image data for matching of a captured object for matching having the degree of coincidence that exceeds an attribute reference value, calculates the degree of similarity between the search object received by the search target input receiving unit and the captured object for matching of the extracted image data for matching, and searches for the image data for matching of a captured object for matching having the degree of similarity that exceeds a reference value.
